# EUROPÄISCHE PATENTSCHRIFT

(11) **EP 0 433 880 B1**
(45) Veröffentlichungstag und Bekanntmachung des Hinweises auf die Patenterteilung: **01.09.1993**
(21) Anmeldenummer: 90124028.3
(22) Anmeldetag: 13.12.1990
(51) Int. Cl.: C07C 249/14

(54) **Verfahren zur Aufarbeitung von Salzsäure, Schwefelsäure und deren Hydroxylammonium- und Ammoniumsalze enthaltenden wässrigen Mutterlaugen**
Process for reprocessing aqueous mother liquors containing hydrochloric acid, sulphuric acid and their hydroxylammonium and ammonium salts
Procédé pour le retraitement d'eaux-mères aqueuses contenant de l'acide chlorhydrique, de l'acide sulfurique et leurs sels d'hydroxylammonium et d'ammonium

(30) Priorität: 21.12.1989 DE 3942334
(43) Veröffentlichungstag der Anmeldung: 26.06.1991
(73) Patentinhaber: BASF Aktiengesellschaft, 67063 Ludwigshafen (DE)
(72) Erfinder: Fuchs, Hugo, Dr., W-6700 Ludwigshafen (DE); Neubauer, Gerald, Dr., W-6940 Weinheim (DE); Ritz, Josef, Dr., W-6700 Ludwigshafen (DE)

(56) Entgegenhaltungen:
- AT-C- 265 240
- DE-A- 2 921 649
- DE-B- 2 408 864

## Beschreibung

Bei der Herstellung von Hydroxylammoniumchlorid geht man zweckmäßig von Hydroxylammoniumsulfat aus, das technisch in großen Mengen hergestellt wird. Zweckmäßig leitet man in eine konzentrierte wäßrige Lösung von Hydroxylammoniumsulfat Chlorwasserstoffgas ein und scheidet dann durch Abkühlen kristallines Hydroxylammoniumchlorid aus, das von der Mutterlauge getrennt wird. Die so erhaltenen Mutterlaugen enthalten Salzsäure, Schwefelsäure sowie deren Hydroxylammonium- und Ammoniumsalze, letztere rühren von der Hydroxylammoniumsulfatherstellung her. Eine Entsorgung über biologische Kläranlagen ist nicht angezeigt, da diese in ihrer Wirkung erheblich beeinträchtigt würden. Andererseits würde es erhebliche Schwierigkeiten bereiten, die so erhaltenen Mutterlaugen wegen ihrer extremen Korrosivität einzudampfen und weiter zu verarbeiten.

Es war deshalb die technische Aufgabe gestellt, Salzsäure, Schwefelsäure und deren Hydroxylammonium- und Ammoniumsalze enthaltende wäßrige Mutterlaugen zu entsorgen und hierbei Wertprodukte mit einem niedrigen Chloridgehalt zu erhalten.

Diese technische Aufgabe wird gelöst in einem Verfahren zur Aufarbeitung von Salzsäure, Schwefelsäure und deren Hydroxylammonium- und Ammoniumsalze enthaltenden wäßrigen Mutterlaugen, wobei man die Mutterlaugen mit einer überschüssigen Menge an Cyclohexanon, bezogen auf den Gehalt an Hydroxylammoniumsalzen, innig in Berührung bringt und durch Zugabe von Alkalihydroxid einem pH-Wert von 3 bis 5,5 aufrechterhält, die Cyclohexanonoxim enthaltende Cyclohexanonphase abtrennt und mit Wasser im wesentlichen chloridfrei wäscht.

Das neue Verfahren hat den Vorteil, daß man im wesentlichen chloridfreies Cyclohexanonoxim gelöst in Cyclohexanon erhält, das ohne weiteres bei der Herstellung von Cyclohexanonoxim bei der Caprolactamherstellung verwendet werden kann. Darüber hinaus hat das neue Verfahren den Vorteil, daß die hierbei anfallenden Abwässer ohne Schwierigkeiten entsorgt werden können.

Erfindungsgemäß geht man von Salzsäure, Schwefelsäure und deren Hydroxylammonium- und Ammoniumsalze enthaltenden wäßrigen Mutterlaugen aus. In der Regel haben die Mutterlaugen einen Gehalt von 2 bis 10 Gew.-% Salzsäure, 30 bis 60 Gew.-% Schwefelsäure, 2 bis 10 Gew.-% Hydroxylamin in Form von Chlorid und Sulfat sowie 1 bis 5 Gew.-% Ammoniak in Form von Chlorid und Sulfat. Eine typische Mutterlauge enthält zum Beispiel 3 bis 5 Gew.-% Salzsäure, 40 bis 50 Gew.-% Schwefelsäure, 3 bis 6 Gew.-% Hydroxylamin als Chlorid und Sulfat sowie 1,5 bis 3 Gew.-% Ammoniak in Form von Chlorid und Sulfat. Solche Mutterlaugen erhält man beispielsweise bei der Herstellung von Hydroxylammoniumchlorid wobei man eine gesättigte Lösung von Hydroxylammoniumsulfat, die von der Herstellung geringe Mengen an Ammoniumsulfat enthält, Chlorwasserstoffsäure einleitet, wobei sich das Gemisch erwärmt, dann die Lösung abkühlt und ausgeschiedenes kristallines Hydroxylammoniumchlorid von der Mutterlauge abtrennt.

Die Mutterlauge wird mit einer überschüssigen Menge an Cyclohexanon, bezogen auf den Gehalt an Hydroxylammoniumsalzen, in Berührung gebracht und durch Zugabe von Alkylihydroxid ein pH-Wert von 3 bis 5,5 aufrechterhalten. Hierbei werden die Hydroxylammoniumsalze zu Cyclohexanonoxim umgesetzt und eine Lösung von Cyclohexanonoxim in Cyclohexanon erhalten.

Geeignete Alkalihydroxide sind beispielsweise Natriumhydroxid oder Kaliumhydroxid. In der Technik wendet man vorzugsweise das wohlfeile Natriumhydroxid an. Die Alkalihydroxide werden zweckmäßig als wäßrige Lösung zum Beispiel mit einem Gehalt von 10 bis 50 Gew.-% an Alkalihydroxid angewandt. Es wird darauf geachtet, daß durch fortlaufende Zugabe von Alkalihydroxidlösung während der Reaktion der genannte pH-Wert von 3 bis 5,5 insbesondere 4 bis 5 aufrechterhalten wird. Vorteilhaft führt man die wäßrige Mutterlauge und Cyclohexanon im Gegenstrom, z.B. durch eine Drehscheibenkolonne, wobei im unteren Teil Cyclohexanon und im oberen Teil Mutterlauge aufgegeben wird und am unteren Ende der Kolonne eine wäßrige Lösung, die im wesentlichen aus Ammoniumsulfat, Ammoniumchlorid, Natriumsulfat, Natriumchlorid, geringe Mengen an Hydroxylammoniumsulfat und -chlorid sowie kleine Mengen an gelösten Cyclohexanon besteht. Am oberen Ende der Kolonne erhält man eine Lösung von Cyclohexanonoxim in Cyclohexanon, die noch durch Chloride und Sulfat verunreinigt ist. Die Umsetzung kann auch in anderen Vorrichtungen diskontinuierlich z.B. ein Rührkessel oder kontinuierlichen Mixer-Settler-Vorrichtungen durchgeführt werden.
Vorteilhaft wendet man je Mol Hydroxylammoniumsalze, die in der Mutterlauge enthalten sind, mindestens 2 Mol Cyclohexanon, insbesondere 2 bis 5 Mol Cyclohexanon an. Die Umsetzung erfolgt in der Regel bei einer Temperatur von 10 bis 90°C. Zweckmäßig wendet man eine Temperatur von 15 bis 60°C an.

Die so erhaltene Lösung von Cyclohexanonoxim in Cyclohexanon wird mit Wasser im wesentlichen chloridfrei gewaschen. Dies erfolgt zweckmäßig durch innige Vermischung in eine Kolonne im Gegenstrom unter Trennung in eine gereinigte Lösung von Cyclohexanonoxim in Cyclohexanon und eine verdünnte wäßrige Lösung, die Sulfate und Chloride sowie geringe Mengen Cyclohexanon als Verunreinigungen enthält. Zweckmäßig wendet man je Volumenteil Lösung von Cyclohexanonoxim in Cyclohexanon 0,1 bis 5 Vol.-Teile Wasser an.

Vorteilhaft wird die nach Umsetzung mit Cyclohexanon und Abtrennung der Cyclohexanonoxim enthaltenden Cyclohexanonphase erhaltene wäßrige Lösung mit dem vorgenannten Waschwasser kombiniert und daraus durch Strippen mit Dampf gelöstes Cyclohexanon zurückgewonnen, das im Kreislauf zurückgeführt wird. Die verbleibende wäßrige Lösung enthält noch 20 mg/kg TOC und 0,05 Gew.-% Hydroxylamin. Diese Lösung kann als behandlungsbedürftiges Abwasser entsorgt werden.
Die erhaltene Lösung von Cyclohexanonoxim in Cyclohexanon hat einen Chloridgehalt von weniger als 2 mg/kg z.B. von 0,5 bis 1 mg/kg und kann ohne Probleme bei der Herstellung von Cyclohexanonoxim für die Caprolactamherstellung verwendet werden.

Das Verfahren nach der Erfindung sei an folgendem Beispiel veranschaulicht.

### Beispiel

500 g einer Mutterlauge mit 0,66 mol Hydroxylamin aus der Hydroxylammoniumchlorid-Herstellung folgender Zusammensetzung:
43,6 g/kg Hydroxylamin (als Salz vorliegend)
42,2 g/kg Salzsäure
464 g/kg Schwefelsäure
2,05 g/kg Ammoniak (als Salz vorliegend)
wurde mit 194 g Cyclohexanon (1,98 mol) unter Zugabe von Natronlauge bei 35°C zur Reaktion gebracht. Der pH-Wert wurde auf 4,9 eingestellt. Die hierzu benötigte Natronlaugemenge betrug 530 g 40 %ige Lösung. Nach Beendigung der Reaktion wurde die organische Phase von der wäßrigen Phase abgetrennt.

Die organische Phase enthält ca. 10 mg/kg an Chloridionen. Durch Waschen mit der 3-fachen Wassermenge läßt sich der Chloridgehalt auf < 1 mg/kg senken. Dieses Anon/Oxim-Gemisch kann ohne Probleme in einer normalen Anlage zur Herstellung von Cyclohexanonoxim mit verarbeitet werden.

Die wäßrige Phase der Oximierung wird zusammen mit dem Waschwasser der Anon/Oxim-Phase mit Dampf gestrippt. Die ausgestrippte Lösung enthält noch 20 mg/kg TOC und 0,05 % Hydroxylamin. Die Lösung kann über das behandlungsbedürftige Abwasser entsorgt werden.

## Patentansprüche

1. Verfahren zur Aufarbeitung von Salzsäure, Schwefelsäure und deren Hydroxylammonium- und Ammoniumsalze enthaltenden wäßrigen Mutterlaugen, dadurch gekennzeichnet, daß man die Mutterlaugen mit einer überschüssigen Menge an Cyclohexanon, bezogen auf den Gehalt an Hydroxylammoniumsalzen unter Aufrechterhaltung eines pH-Wertes von 3 bis 5,5 und Zugabe von Alkalilaugen innig in Berührung bringt, die Cyclohexanonoxim enthaltende Cyclohexanonphase abtrennt und mit Wasser im wesentlichen chloridfrei wäscht.

2. Verfahren nach Anspruch 1, dadurch gekennzeichnet, daß man 2 bis 5 Mol Cyclohexanon je Mol Hydroxylammoniumsalze anwendet.

3. Verfahren nach den Ansprüchen 1 und 2, dadurch gekennzeichnet, daß man einen pH-Wert von 4 bis 5 einhält.

4. Verfahren nach den Ansprüchen 1 bis 3, dadurch gekennzeichnet, daß man die Mutterlauge und Cyclohexanon bei einer Temperatur von 15 bis 60°C umsetzt.

5. Verfahren nach den Ansprüchen 1 bis 4, dadurch gekennzeichnet, daß man die Lösung von Cyclohexanonoxim in Cyclohexanon mit Wasser bis auf einen Chloridgehalt < 2 mg/kg wäscht.

6. Verfahren nach den Ansprüchen 1 bis 5, dadurch gekennzeichnet, daß man die wäßrige Lösung, die nach Abtrennen der Lösung von Cyclohexanonoxim in Cyclohexanon verbleibt, mit dem Waschwasser vereinigt und daraus durch Strippen mit Dampf Cyclohexanon abtrennt und dieses zurückführt.

## Claims

1. A process for working up aqueous mother liquors containing hydrochloric acid, sulfuric acid and their hydroxylammonium and ammonium salts, which comprises the mother liquors being intimately mixed with an excess of cyclohexanone based on the content of hydroxylammonium salts, while maintaining a pH of from 3 to 5.5 by adding alkali metal hydroxide solutions, and the cyclohexanone phase which contains cyclohexanone oxime being-removed and washed with water until essentially free of chloride.

2. A process as claimed in claim 1, wherein 2 to 5 moles of cyclohexanone are used per mole of hydroxylammonium salts.

3. A process as claimed in either of claims 1 and 2, wherein a pH of from 4 to 5 is maintained.

4. A process as claimed in any of claims 1 to 3, wherein the mother liquor and cyclohexanone are reacted at from 15 to 60°C.

5. A process as claimed in any of claims 1 to 4, wherein the solution of cyclohexanone oxime in cyclohexanone is washed with water until the chloride content is < 2 mg/kg.

6. A process as claimed in any of claims 1 to 5, wherein the aqueous solution remaining after removal of the cyclohexanone solution of cyclohexanone oxime is combined with the aqueous washes, and cyclohexanone is removed therefrom by steam stripping and is recycled.

## Revendications

1. Procédé de traitement de lessives-mères aqueuses contenant de l'acide chlorhydrique, de l'acide sulfurique et leurs sels d'hydroxylammonium et d'ammonium, caractérisé en ce que l'on met les lessives-mères en contact intime avec une proportion excédentaire de cyclohexanone, par rapport aux sels d'hydroxylammonium, avec maintient d'une valeur de pH à 3 à 5,5 et addition de lessives d'alcalis, on sépare la phase à la cyclohexanone contenant de la cyclohexanoneoxime et on la lave à l'eau jusqu'à ce qu'elle soit sensiblement dépourvue de chlorure.

2. Procédé suivant la revendication 1, caractérisé en ce que l'on utilise de 2 à 5 moles de cyclohexanone par mole de sels d'hydroxylammonium.

3. Procédé suivant les revendications 1 et 2, caractérisé en ce que l'on maintient une valeur de pH de 4 à 5.

4. Procédé suivant l'une quelconque des revendications 1 à 3, caractérisé en ce que l'on fait réagir la lessive-mère et la cyclohexanone à une température de 15 à 60°C.

5. Procédé suivant l'une quelconque des revendications 1 à 4, caractérisé en ce qu'on lave la solution de cyclohexanoneoxime dans la cyclohexanone avec de l'eau jusqu'à une teneur en chlorure inférieure à 2 mg/kg.

6. Procédé suivant l'une quelconque des revendications 1 à 5, caractérisé en ce que l'on réunit la solution aqueuse, qui subsiste après la séparation de la solution de cyclohexanoneoxime dans la cyclohexanone, à l'eau de lavage et on en sépare la cyclohexanone par entraînement à la vapeur d'eau et on recycle cette cyclohexanone.
